# EUROPÄISCHE PATENTSCHRIFT

(11) **EP 0 622 425 B1**
(45) Veröffentlichungstag und Bekanntmachung des Hinweises auf die Patenterteilung: **26.06.1996**
(21) Anmeldenummer: 94105443.9
(22) Anmeldetag: 08.04.1994
(51) Int. Cl.: C09C 1/00, C09D 7/12, C09D 11/00, C08K 9/02, C03C 4/02, C04B 33/14

(54) **Magnetisierbare Glanzpigmente**
Glossy magnetisable pigments
Pigments brillants magnétisables

(30) Priorität: 24.04.1993 DE 4313541
(43) Veröffentlichungstag der Anmeldung: 02.11.1994
(73) Patentinhaber: BASF Aktiengesellschaft, D-67063 Ludwigshafen (DE)
(72) Erfinder: Schmid, Raimund, Dr., D-67435 Neustadt (DE); Mronga, Norbert, Dr., D-69221 Dossenheim (DE); Ochmann, Harald, Dr., D-67125 Dannstadt-Schauernheim (DE)

(56) Entgegenhaltungen:
- EP-A- 0 033 457
- EP-A- 0 104 075
- EP-A- 0 571 836
- US-A- 3 053 683
- US-A- 3 536 520
- CHEMICAL ABSTRACTS, vol. 114, no. 6, 11. Februar 1991, Columbus, Ohio, US; abstract no. 45985p, Seite 174 ;
- DATABASE WPI Week 8245, Derwent Publications Ltd., London, GB; AN 82-96576E & JP-A-57 161 055 (TOPPAN PRINTING K.K.) 4. Oktober 1982

## Beschreibung

Die vorliegende Erfindung betrifft neue magnetisierbare Glanzpigmente auf der Basis von beschichteten, plättchenförmigen, nichtferromagnetischen, metallischen Substraten mit
A) einer ersten, ferromagnetischen Schicht, die Eisen, Cobalt und/oder Nickel enthält, und gewünschtenfalls
B1) einer weiteren Schicht aus Metalloxid und/oder
B2) einer äußeren, passivierenden, phosphat-, chromat- und/oder vanadathaltigen Schicht.

Außerdem betrifft die Erfindung Mischungen von diesen Pigmenten und mit einer ferromagnetischen, Eisen, Cobalt und/oder Nickel enthaltenden Schicht und gewünschtenfalls einer zusätzlichen. Metalloxidschicht und/oder einer äußeren, passivierenden, phosphat-, chromat- und/oder vanadathaltigen Schicht belegten silikatischen Plättchen, die bereits in einer ersten Schicht mit Metalloxid belegt sein können.

Weiterhin betrifft die Erfindung die Herstellung dieser Pigmente und Pigmentmischungen sowie ihre Verwendung zum Einfärben von Lacken, Druckfarben, Kunststoffen, Gläsern und keramischen Produkten.

Glanz- oder Effektpigmente werden in zunehmendem Maße in vielen Bereichen der Technik eingesetzt, beispielsweise in Automobillacken, in der dekorativen Beschichtung, der Kunststoffeinfärbung, in Druck-, Anstrich-, insbesondere Sicherheitsfarben sowie in der Kosmetik.

Ihre optische Wirkung beruht auf der gerichteten Reflexion von Licht an überwiegend flächig ausgebildeten, ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Voraussetzung für die gerichtete Reflexion ist die Ausrichtung der plättchenförmigen Pigmente im Anwendungsmedium. Bei Lacken und Druckfarben erfolgt diese Ausrichtung in der Regel durch Fließvorgänge innerhalb des Bindemittels während der Applikation.

Schrumpfungsprozesse, die beispielsweise beim Trocknen von dünnen Lackfilmen auftreten, verbessern die gleichmäßige Ausrichtung der Pigmentplättchen noch zusätzlich.

Jedoch können durch unterschiedliche Pigmentorientierungen in verschiedenen Bereichen des Anwendungsmediums auch besondere optische Effekte erreicht werden. So sind beispielsweise bei der Einfärbung von Kunststoffen im Spritzgußverfahren Fließlinien zu beobachten, die durch unterschiedlich orientierte Pigmentplättchen sichtbar gemacht werden.

Interessante dreidimensionale optische Effekte ergeben sich z.B. bei Verwendung magnetisierbarer Pigmentplättchen durch Einwirkung von Magnetfeldern während oder nach der Applikation im noch flüssigen Anwendungsmedium. Magnetisierbare Glanzpigmente sind daher für eine Reihe von Anwendungen wie den Sicherheitsdruck, als magnetisch lesbare Codes oder für künstlerische und dekorative Zwecke von besonderem Interesse.

Als magnetisierbare Glanzpigmente sind prinzipiell solche Pigmente geeignet, bei denen plättchenförmige, ferromagnetische Substratteilchen z.B. aus Eisen oder Nickel, die unbeschichtet oder mit Metalloxid beschichtet sein können, vorliegen oder bei denen ein nichtferromagnetisches, plättchenförmiges Substrat mit magnetisierbaren Schichten belegt ist.

In den DE-A-23 13 331 und 39 38 055 werden magnetisierbare Glanzpigmente auf der Basis von mit Magnetit beschichtetem Glimmer genannt. Aus der US-A-3 536 520 und der JP-A-161 055/1982 sind mit Nickel beschichtete Glimmer bekannt.

Magnetisierbare Glanzpigmente mit plättchenförmigem, nichtferromagnetischem, metallischem Substrat werden lediglich in der älteren, nicht vorveröffentlichten DE-A-42 17 511 beschrieben. Hier ist jedoch das metallische Substrat, insbesondere Aluminium, zunächst mit einer ersten, nicht magnetisierbaren Metalloxidschicht belegt, auf die dann erst die magnetisierbare Schicht aus Magnetit, Eisen, Cobalt oder Nickel und gewünschtenfalls eine weitere, oxidische Deckschicht folgen.

Bei den magnetisierbaren Glanzpigmenten auf Basis beschichteter Glimmer ist das niedrige Deckvermögen aufgrund des transparenten Substratmaterials von Nachteil. Zwar erhöhen zusätzliche Magnetit-, Nickel- oder Cobaltschichten das Deckvermögen dieser Pigmente, jedoch lassen metallähnlicher Glanz und Farbstärke mit zunehmender Dicke der ferromagnetischen Schicht nach.

Bei der Verwendung von ferromagnetischen Substraten wie Nickel- oder Eisenflakes zur Herstellung von magnetisierbaren Glanzpigmenten besteht das Problem der mangelnden Verfügbarkeit, so daß eine wirtschaftliche Herstellung erschwert wird. Zusätzlich wird die Verarbeitung dieser Pigmente durch ihr hohes spezifisches Gewicht erschwert.

Der Erfindung lag daher die Aufgabe zugrunde, neue magnetisierbare Glanzpigmente ohne die genannten Nachteile und mit vorteilhaften Anwendungseigenschaften bereitzustellen.

Demgemäß wurden die eingangs definierten magnetisierbaren Glanzpigmente und ihre Mischungen mit magnetisierbar beschichteten Glimmerpigmenten gefunden.

Außerdem wurde ein Verfahren zur Herstellung dieser Pigmente gefunden, welches dadurch gekennzeichnet ist, daß man das metallische Substrat in einer Wirbelschicht
a) durch Gasphasenzersetzung von Eisen-, Cobalt- und/oder Nickelcarbonylen in Gegenwart eines Inertgases mit einer ersten, ferromagnetischen, Eisen, Cobalt und/oder Nickel enthaltenden Schicht und gewünschtenfalls
b1) anschließend durch Gasphasenzersetzung flüchtiger Metallverbindungen in Gegenwart von Sauerstoff und/oder Wasserdampf mit einer weiteren Schicht aus Metalloxid und/oder
b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

Weiterhin wurde ein Verfahren zur Herstellung der Glanzpigmentmischungen gefunden, welches dadurch gekennzeichnet ist, daß man das metallische Substrat und die unbeschichteten oder bereits metalloxidbeschichteten silikatischen Plättchen gemeinsam in einer Wirbelschicht durch Gasphasenzersetzung gemäß Schritt a) und gegebenenfalls b1) und/oder b2) mit den gewünschten Schichten belegt.

Nicht zuletzt wurde ein Verfahren zur Einfärbung von Lacken, Druckfarben, Kunststoffen, Gläsern und keramischen Produkten gefunden, welches dadurch gekennzeichnet ist, daß man hierfür die erfindungsgemäßen Glanzpigmente oder Glanzpigmentmischungen verwendet.

Außerdem wurde eine besondere Ausführungsform dieses Verfahrens gefunden, welche dadurch gekennzeichnet ist, daß man die Glanzpigmente während oder nach der Applikation im noch flüssigen Anwendungsmedium einem Magnetfeld aussetzt.

Für die erfindungsgemäßen Pigmente sind als Substrat alle nichtferromagnetischen, für Metalleffektpigmente bekannten Metalle und Legierungen in Plättchenform geeignet. Z.B. kommen neben Kupfer und seinen Legierungen wie Messing und Bronzen vor allem Aluminium und seine Legierungen wie Aluminiumbronze in Betracht.

Bevorzugt sind Aluminiumflakes, die in einfacher Weise durch Herausstanzen aus Aluminiumfolie oder nach bekannten Verdüsungs- und Mahltechniken herzustellen sind.

Die Größe der Substratteilchen ist an sich nicht kritisch und kann auf den jeweiligen Anwendungsbereich abgestimmt werden. In der Regel haben die Teilchen mittlere größte Durchmesser von etwa 1 bis 200 µm, insbesondere etwa 5 bis 100 µm und Dicken von etwa 0,1 bis 5 µm.

Es können handelsübliche Produkte eingesetzt werden. Jedoch sollte die Oberfläche der Aluminiumteilchen weitgehend frei von Fetten oder anderen Belegmitteln sein. Diese Substanzen können zum Teil durch Lösungsmittelbehandlung oder besser, wie in der älteren, nicht vorveröffentlichten DE-A-42 23 384 beschrieben, durch oxidative Behandlung entfernt werden.

Bei den erfindungsgemäßen magnetisierbaren Glanzpigmenten ist das Substrat mit einer ferromagnetischen Schicht (A), die Eisen, Cobalt und/oder Nickel enthält, belegt. Die Schicht (A) kann vorteilhaft durch Gasphasenzersetzung der entsprechenden Metallcarbonyle unter Inertgas auf das Substrat aufgebracht werden. Dabei werden glatte, homogene und das Substrat gleichmäßig umhüllende Schichten erhalten.

Die Dicke der Schicht (A) ist an sich nicht kritisch und beträgt im allgemeinen 1 bis 500 nm, bevorzugt 5 bis 200 nm.

Die erfindungsgemäßen Pigmente können mit einer weiteren Schicht (B1) aus Metalloxid belegt sein. Hierfür sind die üblicherweise für die Beschichtung von Glanzpigmenten verwendeten Metalloxide geeignet. Als Beispiele seien farblose Oxide wie Siliciumdioxid, Zirkondioxid und bevorzugt Titandioxid und farbige Oxide wie Chrom(III)oxid und vor allem Eisenoxide wie Magnetit und insbesondere Eisen(III)oxid genannt.

Die Dicke der Schicht (B1) ist ebenfalls nicht kritisch und beträgt im allgemeinen 1 bis 500 nm, vorzugsweise 5 bis 300 nm.

Die Metalloxidschicht (B1) kann zum Schutz der Schicht (A) gegenüber Umwelteinflüssen dienen. Insbesondere bestimmt sie jedoch in Abhängigkeit von der Schichtdicke die Interferenzfarbe des beschichteten Pigments. Handelt es sich um farbige Metalloxide, so wird zusätzlich die Körperfarbe des Pigments verändert.

Werden beispielsweise silberglänzende Pigmente gewünscht, so genügt es, ein geeignetes metallisches Substrat, z.B. Aluminium, mit der ferromagnetischen Schicht (A) zu belegen. Die Schicht (A) verändert das Aussehen der Substrate kaum. Erst bei hohen Schichtdicken (A) von im allgemeinen > 100 nm werden die Pigmente dunkler.

Magnetisierbare, goldene Pigmente können vorteilhaft durch Belegen von Aluminium mit einer Schicht (A) und einer Schicht (B1) geeigneter Dicke, die im wesentlichen aus Eisenoxid, insbesondere Eisen(III)oxid, besteht, erhalten werden.

Rotgoldene oder rote Pigmente sind ebenfalls durch Beschichtung von Aluminium mit ferromagnetischem Metall und Eisen(III)oxid in entsprechender Schichtdicke erhältlich. Jedoch besteht insbesondere bei der Herstellung dieser Pigmente das Problem der leichten Entzündbarkeit durch ein Einsetzen der Thermitreaktion (s. auch die ältere, nicht vorveröffentlichte DE-A-42 09 242).

Magnetisierbare, rotgoldene oder gar rote Pigmente werden daher vorteilhaft und unter Vermeidung der Entzündbarkeit hergestellt, indem Mischungen aus Aluminiumflakes und silikatischen Plättchen beschichtet werden.

Als silikatische Substrate kommen hierfür insbesondere helle bzw. weiße Glimmer in Betracht, wobei Schuppen von vorzugsweise naß vermahlenem Muskovit besonders bevorzugt sind. Selbstverständlich sind auch andere natürliche Glimmer wie Phlogopit und Biotit, künstliche Glimmer, Talk- und Glasschuppen geeignet.

Die zum Einsatz kommenden silikatischen Substratteilchen können in einer ersten Schicht bereits mit Metalloxiden wie Chrom-, Zinn-, Zink-, Aluminium-, Siliciumoxid, Bismutoxychlorid, bevorzugt Eisen(III)oxid und Zirkondioxid, besonders bevorzugt Titandioxid belegt sein. Diese Pigmente sind allgemein bekannt und auch unter den Bezeichnungen Iriodin® (Merck, Darmstadt), Flonac® (Kemira Oy, Pori) oder Mearlin® (Mearlin Corp., New York) im Handel.

Die Zusammensetzung der erfindungsgemäßen Glanzpigmentmischungen aus magnetisierbaren, metallischen Glanzpigmenten (I) und magnetisierbaren, silikatischen Glanzpigmenten (II) ist an sich nicht kritisch, hängt jedoch von der für die Pigmentmischung gewünschten Koloristik ab. Weiterhin sollte jede der beiden Komponenten zu mindestens 5 Gew.-% enthalten sein, um einerseits das Deckvermögen, andererseits aber auch die Sicherheit zu gewährleisten.

Magnetisierbare Rotpigmente mit metallischem Glanz und gutem Deckvermögen ergeben sich beispielsweise bei der Belegung eines Aluminium/Muskovit-Gemisches mit einem Aluminiumgehalt bis zu 50 % mit ferromagnetischem Material (A) und Eisenoxid (insbesondere Eisen(III)oxid) (B1) bis zur entsprechenden Schichtdicke (etwa 70 bis 140 nm).

Außerdem können bei Verwendung der erfindungsgemäßen Glanzpigmentmischungen besondere coloristische Effekte beobachtet werden, wenn als Komponente (II) Interferenzfarben zeigende, metalloxidbeschichtete Glimmer eingesetzt werden.

Werden Substratgemische aus diesen Glimmerpigmenten und Aluminiumflakes nur mit einer ferromagnetischen Schicht belegt, so behalten die Aluminiumflakes ihr metallisches Aussehen weitgehend, während sich die Körperfarbe des Glimmerpigments durch die drastische Absenkung des vom Pigment reflektierten Weißlichtsockels infolge der schwarzen Beschichtung (A) verstärkt.

Magnetisierbare, grünstichige Goldpigmente beispielsweise können durch gemeinsames Beschichten von Aluminiumflakes und Glimmerpigmenten mit grüner Interferenzfarbe zunächst mit ferromagnetischem Material und anschließend mit Eisenoxid bis zum gewünschten Goldton hergestellt werden.

Um die Stabilität der erfindungsgemäßen Glanzpigmente in wäßrigen Systemen zu erhöhen, kann auf die mit einer Schicht (A) und gegebenenfalls auch mit einer Schicht (B1) belegten Pigmente durch Gasphasenpassivierung noch eine zusätzliche, phosphat-, chromat- und/oder vanadathaltige Schicht (B2) aufgebracht werden. Diese Passivierung empfiehlt sich insbesondere bei Aluminiumpigmenten, die in wäßrigen Systemen, beispielsweise Wasserbasislacken, eingesetzt werden sollen.

Bei dem erfindungsgemäßen Verfahren zur Herstellung der magnetisierbaren Glanzpigmente werden die einzelnen Beschichtungen in der Gasphase jeweils durch Zersetzung geeigneter Ausgangsverbindungen in Gegenwart der zu belegenden Substratteilchen vorgenommen. Je nach Art der Beschichtung sind dabei unterschiedliche Ausgangsverbindungen und Reaktionsbedingungen erforderlich.

Die Beschichtung kann vorteilhaft in einem beheizbaren Wirbelschichtreaktor, wie er beispielsweise in der EP-A-45 581 beschrieben ist, vorgenommen werden. Die Substratteilchen (die Metallflakes oder ihre Gemische mit silikatischen Plättchen) werden dabei zunächst mit einem Wirbelgas fluidisiert und auf die für die Zersetzung der jeweiligen Metallverbindung erforderliche Temperatur von in der Regel 70 bis 350^{o}C erhitzt. Die verdampften Metallverbindungen und die gegebenenfalls zur Zersetzung benötigten Gase werden dann über getrennte Düsen eingetragen.

Zur Abscheidung der ferromagnetischen, metallischen Schicht (A) werden vorzugsweise die Metallcarbonyle, bevorzugt Nickeltetracarbonyl und Dicobaltoctacarbonyl und besonders bevorzugt Eisenpentacarbonyl, eingesetzt, die in einem Schutzgas wie Stickstoff oder Argon, das auch zur Verwirbelung der Substratteilchen benutzt wird, zu den jeweiligen Metallen thermisch zersetzt werden.

Nach abgeschlossener Belegung wird der Reaktor abgekühlt, wobei den Wirbelgasen zweckmäßigerweise etwas Luft zugemischt wird, um die Schichtoberfläche durch Oxidation zu passivieren.

Soll nach der ferromagnetischen Schicht (A) noch eine Metalloxidschicht (B1) und/oder eine passivierende Schicht (B2) aufgebracht werden, so muß das Produkt nach beendeter Belegung nicht zwischenisoliert werden, vielmehr kann die weitere Schicht vorteilhaft direkt anschließend an die vorhergehende Beschichtung, gegebenenfalls nach leichter Temperaturerniedrigung und erforderlichenfalls nach Austausch des Wirbelgases, in demselben Reaktor vorgenommen werden.

Zur Abscheidung einer weiteren Schicht (B1) aus Metalloxiden werden als flüchtige Metallverbindungen bevorzugt die Carbonyle und die Alkoholate, sowohl aromatische wie Phenolate und Benzylalkoholate als auch aliphatische, vor allem C₁-C₄-Alkoholate, wie n-, iso- und tert. Butanolate, bevorzugt Methanolate und Ethanolate und besonders bevorzugt n- und iso-Propanolate eingesetzt.

Als bevorzugte Metallverbindungen seien beispielsweise Eisenpentacarbonyl, Nickeltetracarbonyl, Dicobaltoctacarbonyl, Chromhexacarbonyl, Titan-, Zirkon-tetra-n- und -isopropanolat und Siliciumtetraethanolat genannt.

Die Carbonyle werden zweckmäßigerweise durch Sauerstoff im Gemisch mit Stickstoff (z.B. Luft) oxidiert, während die Alkoholate durch Wasserdampf in An- oder Abwesenheit von Sauerstoff (bzw. Luft) hydrolysiert werden. Dabei muß mindestens die stöchiometrisch zur Bildung des gewünschten Oxids und im Fall der Carbonyle auch von Kohlendioxid erforderliche Menge Sauerstoff oder Wasserdampf zugeführt werden, man kann jedoch auch mit einem geringen Überschuß arbeiten. Bei dieser Belegung kann sowohl Stickstoff als auch Luft als Wirbelgas dienen.

Für alle Beschichtungen werden die Metallverbindungen zweckmäßigerweise in einer dem Reaktor vorgeschalteten Verdampfervorlage verdampft und mit einem Trägergas, je nach den erforderlichen Reaktionsbedingungen in der Regel Luft oder Stickstoff, in den Reaktor transportiert.

Um das Substrat gleichmäßig und vollständig umhüllende, homogene Schichten zu erhalten, sollte die Gasmenge der Metallverbindung im allgemeinen nicht mehr als 5 Vol.-%, vorzugsweise nicht mehr als 2 Vol.-% der Gesamtgasmenge im Reaktor betragen.

Insbesondere für den Einsatz in wäßrigen Systemen empfiehlt sich die Passivierung der mit einer Schicht (A) und gegebenenfalls auch einer Schicht (B1) belegten Pigmente durch Aufbringen einer zusätzlichen, phosphat-, chromat- und/oder vanadathaltigen Schicht (B2).

Die Passivierung kann, wie in der älteren deutschen Patentanmeldung DE-A-4236332 beschrieben, vorteilhaft durch Gasphasenzersetzung von verdampfbaren Phosphor-, Chrom- und/oder Vanadiumverbindungen in Gegenwart von Wasserdampf erfolgen.

Sehr gute Wasserbeständigkeiten lassen sich durch hydrolytische Zersetzung von verdampften phosphorhaltigen Verbindungen, die sich insbesondere von den Sauerstoffsäuren des Phosphors ableiten, erhalten.

Unter diesen sind die Tri- und Di-(C₁-C₄-alkyl)ester der Phosphorsäure und die Tri- und Di-(C₁-C₂-alkyl)ester der phosphorigen Säure besonders bevorzugt. Als Beispiele seien die Ester (RO)₃PO (R = Methyl, Ethyl, Propyl, iso-Propyl, Butyl oder iso-Butyl) und (RO)₂PO(OH) (R = Methyl, Ethyl) sowie (RO)₃P und (RO)₂P(OH) (R = Methyl, Ethyl) genannt.

Ebenfalls sehr gut geeignet sind die Phosphoroxyhalogenide POX₃ mit X = gleiche oder verschiedene Halogene. Bevorzugte Beispiele sind hier: POCl₃, POBrCl₂, POBr₂Cl und POBr₃.

Weiterhin werden auch sehr gute Ergebnisse durch Verwendung von verdampfbaren Oxychloriden anderer Metalle, insbesondere von Chromylchlorid (CrO₂Cl₂) und auch von Vanadiumoxidchlorid (VOCl₃) erhalten.

Bei der Gasphasenpassivierung geht man üblicherweise so vor, daß man die Substratteilchen mit einem inerten Gas wie Stickstoff fluidisiert und einen Teil des Wirbelgases über eine dem Reaktor vorgeschaltete Verdampfervorlage mit den entsprechenden Phosphor-, Chrom- und/oder Vanadiumverbindungen und einen anderen Teil des Wirbelgases über ein mit Wasser beschicktes Verdampfergefäß mit Wasserdampf belädt.

Dabei sollte die Gasmenge der Phosphor-, Chrom- und/oder Vanadiumverbindung in der Regel nicht mehr als 3 Vol.-%, bevorzugt 0,001 bis 0,5 Vol.-% der Gesamtgasmenge im Reaktor betragen.

Die Menge des zudosierten Wasserdampfs hängt von der Konzentration der passivierenden Spezies ab und sollte mindestens der stöchiometrisch erforderlichen Menge entsprechen; bevorzugt ist die 10 bis 100 fache molare Menge an Wasserdampf.

In der Regel wird die Passivierung bei 100 bis 350^{o}C vorgenommen. Bei einer Phosphatierung ausgehend von Phosphoroxychlorid beispielsweise beträgt die Reaktionstemperatur bevorzugt 130 bis 220^{o}C.

Wie üblich können die mit einer passivierenden Schicht belegten Pigmente nach Abkühlung dem Reaktor entnommen werden.

Mit Hilfe des erfindungsgemäßen Verfahrens können die neuen Glanzpigmente und Glanzpigmentmischungen in einfacher und reproduzierbarer Weise gezielt hergestellt werden. Die erhaltenen Pigmente zeichnen sich durch hohe Qualität der Beschichtung, d.h. durch homogene, gleichmäßige und die Substratteilchen filmartig umhüllende Schichten, aus.

Die erfindungsgemäßen magnetisierbaren Glanzpigmente und Glanzpigmentmischungen eignen sich vorteilhaft für viele Zwecke wie zur Einfärbung von Lacken, Druckfarben, Kunststoffen, Gläsern und keramischen Produkten. Sie zeigen hohen Glanz und gutes Deckvermögen und sind aufgrund ihrer ferromagnetischen Eigenschaften für besondere Anwendungen, wie die Erzeugung von dreidimensionalen optischen Effekten durch die Einwirkung von Magnetfeldern während oder nach der Applikation im noch flüssigen Anwendungsmedium geeignet. Beispielsweise seien der Sicherheits- und Wertschriftendruck genannt; Hologramme auf Scheckkarten können z.B. durch kostengünstigere, ähnlich wirkende, durch Magnetfelder ausgerichtete Glanzpigmente ersetzt werden.

### Beispiele

### Herstellung von erfindungsgemäßen magnetisierbaren Glanzpigmenten und Glanzpigmentmischungen

Die in den Beispielen beschriebenen Beschichtungen von Substratteilchen wurden jeweils in einem von außen beheizbaren Wirbelschichtreaktor aus Glas mit einem Durchmesser von 8 cm und einer Höhe von 80 cm mit Glasfrittenboden und oben eingehängten, mit einem Stickstoff-Jet abreinigenden Filterstrümpfen und zwei seitlich oberhalb des Frittenbodens eingebrachten Düsen zur Gaseinleitung durchgeführt.

Zur Beurteilung der magnetischen Eigenschaften der erhaltenen Pigmente wurden die Sättigungsmagnetisierung Mₛ [nTm³/g], die Remanenz Mᵣ [nTm³/g] und die Koerzitivfeldstärke H_{c} [kA/m] mit einem Schwingmagnetometer gemessen.

Zur Beurteilung der Koloristik der erhaltenen Pigmente wurden je 0,4 g der Pigmentproben in 3,6 g eines Polyester-Mischlackes mit 21 Gew.-% Feststoffanteil eingerührt und 2 Minuten lang im Red Devil dispergiert. Mit einer Rakel (160 µm Naßfilmdicke) wurden anschließend auf einem schwarzweißen Karton Abzüge der pigmentierten Lacke angefertigt. Die Messung der CIELAB-Werte erfolgte nach dem Trocknen des Films mit einem Gonio-Spektralphotometer Multiflash M 45 der Firma Optronik (Berlin) bei einer Winkel-Differenz von 20^{o} - 115^{o} zum Glanzwinkel. Die Angaben der Farbwerte (L, a*, b*) beziehen sich auf die Normlichtart D 65 und einen Betrachtungswinkel von 25^{o}. Dabei entspricht L der Helligkeit, a* dem Rot- bzw. Grünanteil und b* dem Blau- bzw. Gelbanteil. H ist der Farbwinkel und C^{*} das Chroma. Gemessen wurde über weißem Untergrund an einfach abgerakelten Proben.

Zur Beurteilung der Koloristik im Bronzierdruck wurden Papierbögen zunächst im Offset-Verfahren mit einem nicht pigmentierten Klebefirnis (Bronzierfirnis) aus 95 Gew.-% Leinölfirnis und phenolmodifiziertem Kolophoniumharzester und 5 Gew.-% Polyvinyltoluol bedruckt und dann sofort in die Bronzierstation weitergeführt, wo sie mit dem jeweiligen Pigment bestäubt wurden. Überschüssiges Pigmentpulver wurde durch eine Samtrakel entfernt.

### Beispiel 1

Eine Mischung aus 100 g handelsüblichem Aluminiumpigment (BET-Oberfläche 4,5 m²/g, mittlerer Teilchendurchmesser 20 µm) und 100 g gröberem, handelsüblichem Aluminiumpigment (BET-Oberfläche 1,5 m²/g, mittlerer Teilchendurchmesser 60 µm) wurde im Wirbelschichtreaktor unter Verwirbelung mit insgesamt 800 l/h Stickstoff auf 190°C erhitzt. Dabei wurde die Hälfte der Stickstoffmenge über eine auf Raumtemperatur gehaltene Vorlage mit Eisenpentacarbonyl geleitet. Innerhalb von 8 h wurden so 123 g Fe(CO)₅ zugeführt.

Beim anschließenden Abkühlen des Reaktors wurde dem Wirbelgas zur Passivierung pyrophorer Anteile der gebildeten Eisenschicht etwas Luft zugesetzt.

Das erhaltene, starken metallischen Glanz zeigende Pigment hatte einen Eisengehalt von 14,5 Gew.-% und folgende Magnetwerte: Sättigungsmagnetisierung Mₛ = 29,0 nTm³/g, Remanenz Mᵣ = 3,5 nTm³/g und Koerzitivfeldstärke H_{c} = 15,3 kA/m.

Bei der Applikation in Lack orientierten sich die Pigmentplättchen bei der Einwirkung eines Magnetfelds im noch feuchten Lackfilm entlang der Feldlinien. Im getrockneten Lack ergaben sich auf diese Weise dreidimensionale Strukturen.

### Beispiel 2

Analog Beispiel 1 wurden 200 g der gleichen Aluminiumpigmentmischung unter Verwendung von 145 g Eisenpentacarbonyl zunächst mit Eisen beschichtet.

Zur Passivierung wurden die eisenbeschichteten Aluminiumplättchen anschließend unter Verwirbelung mit insgesamt 800 l/h Stickstoff auf 190 °C erhitzt. Dabei wurde die eine Hälfte des Stickstoffs über eine auf 70°C temperierte Vorlage mit Phosphoroxychlorid und die andere Hälfte über eine auf 50°C temperierte Wasservorlage geleitet. Innerhalb von etwa 15 h wurden so 70 ml POCl₃ zugeführt.

Das erhaltene Pigment hatte einen Phosphorgehalt von 2 Gew.-% und folgende Magnetwerte: Mₛ = 31,0 nTm³/g, Mᵣ = 3,6 nTm³/g, H_{c} = 15,4 kA/m.

Zur Überprüfung der Wasserbeständigkeit wurde der in der DE-A-40 30 727 beschriebene Kochtest durchgeführt, indem eine Mischung aus 1,5 g Pigment und 150 g Wasser in einer gasdicht verschließbaren Apparatur zum Sieden erhitzt wurde. Das Pigment entwickelte nach 24 h 400 ml Wasserstoff, was einer guten Wasserbeständigkeit entspricht.

### Beispiel 3

Analog den Angaben in Beispiel 1 wurden 200 g der gleichen Aluminiumpigmentmischung zunächst mit einer Eisenschicht belegt.

Beim anschließenden Abkühlen des Reaktors auf etwa 100°C wurde dem Wirbelgas zur Passivierung pyrophorer Anteile der gebildeten Eisenschicht etwas Luft zudosiert.

Dann wurde unter Verwirbelung mit insgesamt 1000 l/h Wirbelgas erneut auf 190°C erhitzt. Dabei wurden 400 l/h Stickstoff über eine auf Raumtemperatur gehaltene Vorlage mit Eisenpentacarbonyl, 400 l/h Stickstoff über eine auf 50°C temperierte Wasservorlage und 200 l/h Luft eingeleitet. Innerhalb von 24 h wurden so 363,2 g (Fe(CO)₅ zugeführt und zu Eisen(III)oxid zersetzt.

Das erhaltene rote Glanzpigment hatte einen Eisengehalt von 33 Gew.-% und folgende Magnetwerte: Mₛ = 13,0 nTm³/g, Mᵣ = 1,7 nTm³/g, H_{c} = 31,0 kA/m.

### Beispiel 4

Analog Beispiel 1 wurde eine Mischung aus 60 g Aluminiumpigment (BET-Oberfläche 1,5 m²/g, mittlerer Teilchendurchmesser 60 µm) und 140 g titandioxidbeschichtetem Glimmer mit grüner Interferenzfarbe (Iriodin® 9235 Rutil Perlgrün, Merck) unter Verwendung von 116 g Eisenpentacarbonyl in 6 h mit Eisen beschichtet.

Das erhaltene, metallisch glänzende, grüne Pigment hatte einen Eisengehalt von 14,4 Gew.-% und folgende Magnetwerte: Mₛ = 29,7 nTm³/g, Mᵣ = 4,5 nTm³/g, H_{c} = 11,9 kA/m.

### Beispiel 5

Die in Beispiel 4 hergestellte Pigmentmischung wurde unter Verwirbelung mit insgesamt 1000 l/h Wirbelgas auf 180°C erhitzt. Dabei wurden 400 l/h Stickstoff über eine auf Raumtemperatur gehaltene Vorlage mit Eisenpentacarbonyl, 400 l/h Stickstoff über eine auf 50°C temperierte Wasservorlage und 200 l/h Luft eingeleitet.

Innerhalb von 4 h wurden so 50,9 g Fe(CO)₅ zugeführt und zu Eisen(III)oxid zersetzt.

Das erhaltene, einen grünlich goldenen Farbton zeigende Pigment hatte einen Eisengehalt von 16,7 Gew.-% und ergab appliziert folgende CIELAB-Werte:
- Meßwinkel 20°:: a* = 8,2, b* = 36,0; L = 88,2; H = 77,1°; C* = 36,9;
- Meßwinkel 45°:: a* = 5,3; b* = 17,5, L = 45,4; H = 73,1°; C* = 18,3.
- Meßwinkel 115°:: a* = 6,2; b* = 12,8; L = 34,8; H = 64,2°; C* = 14,2.

Die Magnetwerte betrugen: Mₛ = 23,0 nTm³/g, Mr = 3,5 nTm³/g, H_{c} = 12,7 kA/m.

Im Bronzierdruck appliziert, zeigte das Pigment starken Glanz.

## Patentansprüche

1. Magnetisierbare Glanzpigmente auf der Basis von beschichteten, plättchenförmigen, nichtferromagnetischen, metallischen Substraten mit
A) einer ersten, ferromagnetischen Schicht, die Eisen, Cobalt und/oder Nickel enthält, und gewünschtenfalls
B1) einer weiteren Schicht aus Metalloxid und/oder
B2) einer äußeren, passivierenden, phosphat-, chromat- und/oder vanadathaltigen Schicht.

2. Glanzpigmente nach Anspruch 1, bei denen das nichtferromagnetische, metallische Substrat im wesentlichen aus Aluminium besteht.

3. Magnetisierbare Glanzpigmentmischungen aus
I) den Glanzpigmenten gemäß Anspruch 1 oder 2 und
II) mit einer ferromagnetischen, Eisen, Cobalt und/oder Nickel enthaltenden Schicht und gewünschtenfalls einer zusätzlichen Metalloxidschicht und/oder einer äußeren, passivierenden, phosphat-, chromat- und/oder vanadathaltigen Schicht belegten silikatischen Plättchen, die bereits in einer ersten Schicht mit Metalloxid belegt sein können,
als wesentlichen Komponenten.

4. Verfahren zur Herstellung der Glanzpigmente gemäß Anspruch 1 oder 2, dadurch gekennzeichnet, daß man das metallische Substrat in einer Wirbelschicht
a) durch Gasphasenzersetzung von Eisen-, Cobalt- und/oder Nickelcarbonylen in Gegenwart eines Inertgases mit einer ersten, ferromagnetischen, Eisen, Cobalt und/oder Nickel enthaltenden Schicht und gewünschtenfalls
b1) anschließend durch Gasphasenzersetzung flüchtiger Metallverbindungen in Gegenwart von Sauerstoff und/oder Wasserdampf mit einer weiteren Schicht aus Metalloxid und/oder
b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

5. Verfahren zur Herstellung der Glanzpigmentmischungen gemäß Anspruch 3, dadurch gekennzeichnet, daß man das metallische Substrat und die unbeschichteten oder bereits metalloxidbeschichteten silikatischen Plättchen gemeinsam in einer Wirbelschicht
a) durch Gasphasenzersetzung von Eisen-, Cobalt- und/oder Nickelcarbonylen in Gegenwart eines Inertgases mit einer ersten, ferromagnetischen, Eisen, Cobalt und/oder Nickel enthaltenden Schicht und gewünschtenfalls
b1) anschließend durch Gasphasenzersetzung flüchtiger Metallverbindungen in Gegenwart von Sauerstoff und/oder Wasserdampf mit einer weiteren Schicht aus Metalloxid und/oder
b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

6. Verfahren zur Einfärbung von Lacken, Druckfarben, Kunststoffen, Gläsern und keramischen Produkten, dadurch gekennzeichnet, daß man hierfür die Glanzpigmente gemäß den Ansprüchen 1 bis 3 verwendet.

7. Verfahren nach Anspruch 6, dadurch gekennzeichnet, daß man die Glanzpigmente während oder nach der Applikation im noch flüssigen Anwendungsmedium einem Magnetfeld aussetzt.

8. Verfahren nach Anspruch 6 oder 7, dadurch gekennzeichnet, daß man es im Sicherheitsdruck zur Erzeugung von 3D-Effekten anwendet.

## Claims

1. Magnetizable luster pigments comprising platelet-shaped, nonferromagnetic, metallic substrates coated with
A) a first, ferromagnetic layer comprising iron, cobalt and/or nickel, and if desired
B1) a further layer, this time comprising a metal oxide, and/or
B2) an outer, passivating, phosphate-, chromate- and/or vanadate-containing layer.

2. Luster pigments as claimed in claim 1 wherein the nonferromagnetic, metallic substrate consists essentially of aluminum.

3. Magnetizable luster pigment mixtures comprising
I) the luster pigments of claim 1 or 2, and
II) silicatic platelets coated with a ferromagnetic, iron-, cobalt- and/or nickel-containing layer and if desired an additional metal oxide layer and/or an outer, passivating, phosphate-, chromate- and/or vanadate-containing layer, with or without a first layer of metal oxide underneath,
as essential components.

4. A process for preparing the luster pigments of claim 1 or 2, which comprises coating the metallic substrate in a fluidized bed with
a) a first, ferromagnetic, iron-, cobalt- and/or nickel-containing layer, by gas phase decomposition of iron, cobalt and/or nickel carbonyls in the presence of an inert gas, and subsequently, if desired, with
b1) a further layer, this time of a metal oxide, by gas phase decomposition of volatile metal compounds in the presence of oxygen and/or water vapor, and/or with
b2) an additional, passivating, phosphate-, chromate- and/or vanadate-containing layer by gas phase decomposition of vaporizable phosphorus, chromium and/or vanadium compounds in the presence of water vapor.

5. A process for preparing the luster pigment mixtures of claim 3, which comprises coating the metallic substrate and the uncoated or already metal oxide-coated silicatic platelets conjointly in a fluidized bed with
a) a first, ferromagnetic, iron-, cobalt- and/or nickel-containing layer, by gas phase decomposition of iron, cobalt and/or nickel carbonyls in the presence of an inert gas, and subsequently, if desired, with
b1) a further layer, this time of a metal oxide, by gas phase decomposition of volatile metal compounds in the presence of oxygen and/or water vapor, and/or with
b2) an additional, passivating, phosphate-, chromate- and/or vanadate-containing layer by gas phase decomposition of vaporizable phosphorus, chromium and/or vanadium compounds in the presence of water vapor.

6. A process for coloring paints, printing inks, plastics, glasses and ceramic products, which comprises using the luster pigments of any of claims 1 to 3.

7. A process as claimed in claim 6 additionally comprising exposing the luster pigments to a magnetic field during or after application in the still liquid application medium.

8. A process as claimed in claim 6 or 7 for producing 3D effects in security printing.

## Revendications

1. Pigments brillants magnétisables à base de supports métalliques, non ferromagnétiques, en forme de plaquettes, revêtus avec
A) une première couche ferromagnétique, qui contient du fer, du cobalt et/ou du nickel et, si cela se révèle souhaitable,
B1) une autre couche d'oxyde de métal et/ou
B2) d'une couche externe, passivante, contenant du phosphate, du chromate et/ou du vanadate.

2. Pigments brillants suivant la revendication 1, dans lesquels le support métallique, non ferromagnétique, est essentiellement constitué d'aluminium.

3. Mélanges de pigments brillants magnétisables, constitués
I) des pigments brillants suivant la revendication 1 ou 2 et
II) d'une couche ferromagnétique contenant du fer, du cobalt et/ou du nickel et, si cela se révèle souhaitable, d'une couche d'oxyde de métal supplémentaire et/ou de plaquettes silicatées, revêtues d'une couche externe, passivante, contenant du phosphate, du chromate et/ou du vanadate, qui peuvent déjà être revêtues d'oxyde de métal dans une première couche,
à titre de composants essentiels.

4. Procédé de fabrication des pigments brillants suivant la revendication 1 ou 2, caractérisé en ce que l'on revêt le support métallique, dans une couche tourbillonnante ou fluidisée,
a) par décomposition en phase gazeuse de fer-, cobalt- et/ou nickelcarbonyles, en présence d'un gaz inerte, d'une première couche ferromagnétique, contenant du fer, du cobalt et/ou du nickel et, si cela se révèle souhaitable,
b1) ensuite, par décomposition en phase gazeuse, de composés de métaux volatils, en présence d'oxygène et/ou de vapeur d'eau, d'une couche supplémentaire d'oxyde de métal et/ou
b2) par décomposition en phase gazeuse de composés évaporables ou volatilisables de phosphore, du chrome et/ou de vanadium, en présence de vapeur d'eau, d'une couche supplémentaire, passivante, contenant du phosphate, du chromate et/ou du vanadate.

5. Procédé de préparation de mélanges de pigments brillants suivant la revendication 3, caractérisé en ce que l'on revêt le support métallique et les plaquettes silicatées non revêtues, ou déjà revêtues d'oxydes de métaux, en commun, dans une couche turbulente ou fluidisée,
a) par décomposition en phase gazeuse de fer-, cobalt- et/ou nickelcarbonyles, en présence d'un gaz inerte, d'une première couche ferromagnétique, contenant du fer, du cobalt et/ou du nickel et, si cela se révèle souhaitable,
b1) ensuite, par décomposition en phase gazeuse, de composés de métaux volatils, en présence d'oxygène et/ou de vapeur d'eau, d'une couche supplémentaire d'oxyde de métal et/ou
b2) par décomposition en phase gazeuse de composés évaporables ou volatilisables de phosphore, du chrome et/ou de vanadium, en présence de vapeur d'eau, d'une couche supplémentaire, passivante, contenant du phosphate, du chromate et/ou du vanadate.

6. Procédé pour la coloration ou teinture de laques ou vernis, d'encres d'impression, de matières plastiques, de produits en verre et en matières céramiques, caractérisé en ce que l'on utilise à cette fin les pigments brillants suivant les revendications 1 à 3.

7. Procédé suivant la revendication 6, caractérisé en ce que l'on expose les pigments brillants à un champ magnétique pendant ou après l'application dans le milieu d'utilisation encore liquide.

8. Procédé suivant la revendication 6 ou 7, caractérisé en ce qu'on l'utilise dans l'impression de sécurité pour l'obtention d'effets 3D.
